# EUROPÄISCHE PATENTANMELDUNG

(11) **EP 4 810 236 A1**
(43) Veröffentlichungstag der Anmeldung: **23.09.2026**
(21) Anmeldenummer: 26165754.8
(22) Anmeldetag: 18.03.2026
(51) Int. Cl.: B29D 29/06

(54) **VORRICHTUNG MIT MINDESTENS EINEM ENDLOSBAND**

(30) Priorität: 20.03.2025 DE 102025110824
(71) Anmelder: Dahlhaus, Ludwig, 32609 Hüllhorst (DE)
(72) Erfinder: Dahlhaus, Ludwig, 32609 Hüllhorst (DE)
(74) Vertreter: Kleine, Hubertus

(57) **Zusammenfassung**

Die Erfindung betrifft eine Vorrichtung (1) mit mindestens zwei voneinander beabstandeten Trommeln (3), über die ein Endlosband (10) mit mindestens einem Flächenheizelement (14) umlaufend geführt ist, wobei dem Endlosband (10) in zumindest einem Abschnitt seiner umlaufenden Bewegung Betriebsenergie für das Flächenheizelement (14) zuführbar ist. Die Vorrichtung (1) zeichnet sich dadurch aus, dass
- das Endlosband (10) an einer Seite mindestens zwei Kontaktelemente (143) zum Zuführen von Betriebsstrom für das mindestens eine Flächenheizelement (14) aufweist, und
- seitlich neben jeder der Trommeln (3) jeweils eine drehbare Riemenscheibe angeordnet ist; wobei
- über die Riemenscheiben ein Riemen geführt ist, an dem mindestens ein Energieempfänger (18) angeordnet ist, der Energie von einem Energietransmitter (9) empfängt; und wobei
- der Energieempfänger (18) zum Übertragen der empfangenen Energie an das mindestens eine Flächenheizelement (14) mit den mindestens zwei Kontaktelementen (143) verbunden ist.

## Beschreibung

Die Erfindung betrifft eine Vorrichtung mit mindestens zwei voneinander beabstandeten Trommeln, über die ein Endlosband mit mindestens einem Flächenheizelement umlaufend geführt ist, wobei dem Endlosband in zumindest einem Abschnitt seiner umlaufenden Bewegung Betriebsenergie für das Flächenheizelement zuführbar ist.

Endlosbänder werden in technischen Vorrichtungen vielfältig eingesetzt, beispielsweise in Doppelbandpressen und zu Transport- und Förderzwecken. Endlosbänder können hergestellt werden, indem zwei Enden eines Bandabschnitts aufeinander gelegt und miteinander verbunden werden.

Alternativ dazu sind Verfahren zur Herstellung von nahtlosen Endlosbändern bekannt, beispielsweise aus der Druckschrift DE 3 238 239 A1. Bei diesem Verfahren wird ein bindemittelgetränktes Garn oder Seil spiralförmig nebeneinander auf zwei voneinander beabstandete drehbare Trommeln aufgewickelt.

Auch die Schrift EP 2 828 072 B1 beschreibt ein nahtloses Endlosband bei dem durch moderne Kunststofffasern, beispielsweise Fasern aus Polyetherketon (PEEK) oder Polysulfon (PSU) oder Polytetrafluorethylen (PTFE), eine besonders hohe Reißfestigkeit erreicht wird. Weiter weist das in dieser Schrift gezeigte Endlosband eine Flächenheizlage auf, die durch mehrere übereinander oder überlappend angeordnete Widerstandsheizlagen gebildet wird.

Ein derartiges heizbares Endlosband kann vorteilhaft in vielen Herstellungsprozessen eingesetzt werden, in denen über das Endlosband ein Temperieren eines Produktes erfolgt. Die integrierte Flächenheizlage des Endlosbandes kann zusätzlich zu einer Heizplatte, über die das Endlosband geführt wird, eingesetzt werden oder die Heizplatte vollständig ersetzen. Auf das Endlosband sind zwei umlaufende Elektrodenstreifen aufgebracht, jeweils einer entlang jeder Längsseite des Bandes. Über die Elektrodenstreifen kann z.B. mittels jeweils einem Schleifkontakt Strom zum Betreiben der Widerstandsheizlagen zugeführt werden.

Nachteilig daran ist, dass nur ein Stromkreis zur Verfügung steht, um alle Widerstandsheizlagen mit Strom zu versorgen. In den Elektrodenstreifen entstehen zudem unkontrolliert hohe Verlustleistungen, insbesondere bei der Versorgung einer Widerstandsheizlage, die bei einer aktuellen Bandstellung entfernt von den Schleifkontakten positioniert ist. Zwar könnten bei der in der Schrift EP 2 828 072 B1 gezeigten Anordnung mehr als zwei Elektrodenstreifen aufgebracht werden, um Widerstandsheizlagen einzeln oder in kleineren Gruppen separat mit Strom zu versorgen, in dem Fall würde jedoch die nutzbare Breite des Bandes stark verringert.

Es ist daher eine Aufgabe der vorliegenden Erfindung, eine Vorrichtung mit einem Endlosband, das mindestens ein Flächenheizelement aufweist, bereitzustellen, bei der das mindestens eine Flächenheizelement kontrolliert während einer Umlaufbewegung des Endlosbands geheizt werden kann.

Diese Aufgabe wird gelöst durch eine Vorrichtung mit den Merkmalen des unabhängigen Anspruchs. Vorteilhafte Ausgestaltungen und Weiterbildungen sind in den abhängigen Ansprüchen angegeben.

Eine erfindungsgemäße Vorrichtung der eingangs genannten Art zeichnet sich dadurch aus, dass das Endlosband an einer Seite mindestens zwei Kontaktelemente zum Zuführen von Betriebsstrom für das mindestens eine Flächenheizelement aufweist, und dass seitlich neben jeder der Trommeln jeweils eine drehbare Riemenscheibe angeordnet ist, wobei über die Riemenscheiben ein Riemen geführt ist. An dem Riemen ist mindestens ein Energieempfänger angeordnet, der Energie von einem Energietransmitter empfängt, wobei der Energieempfänger zum Übertragen der empfangenen Energie an das mindestens eine Flächenheizelement mit den mindestens zwei Kontaktelementen verbunden ist.

Durch den mindestens einen mitgeführten Energieempfänger kann dem mindestens einen Flächenheizelement an jeder Umlaufposition des Endlosbands definiert Energie zugeführt werden, ohne dass von der Umlaufposition abhängigen Spannungsabfälle an Elektrodenstreifen auftreten, die gemäß dem Stand der Technik im Endlosband in Längsrichtung, d.h. Umlaufrichtung, angeordnet sind.

Die Vorrichtung kann Teil einer größeren Anlage sein, z.B. einer Bandpresse, einer Doppelbandpresse oder einer Produktionsstraße für Produkte, die während ihres Produktionsprozesses transportiert und geheizt werden. Vorteilhaft kann das Endlosband eine Trägerlage aufweisen, auf die das mindesten eine Flächenheizelement aufgebracht ist, insbesondere aufgeklebt ist. Besonders vorteilhaft kann die Trägerlage ein endloses Trägerband sein, insbesondere ein bereits kommerziell erhältliches Endlosband. Das Trägerband kann aus einem Vollmaterial, insbesondere aus Metall, Kunststoff oder Gummi, bestehen. Alternativ kann das Trägerband einen Faserverbund aufweisen, insbesondere aufweisend Metallfasern, Glasfasern, Kunststofffasern und/oder Naturfasern. Vorteilhaft ist das mindestens eine Flächenheizelement mittels einer elastischen Kleberschicht mit der Trägerlage verbunden. Durch die Flexibilität kann die Kleberschicht eine beim Umlaufen des Endlosbands auftretenden Scherbewegungen aufnehmen. Die Kleberschicht kann beispielsweise ein Acrylat-, Polyurethan- oder Silikon-basiert sein. Durch die flexible Kleberschicht werden Spannungen beim Umlaufen des Endlosbands verringert und so die Lebensdauer des Bands erhöht.

Bei dem Endlosband kann das mindestens eine Flächenheizelement an der Außenseite oder der Innenseite der Trägerlage angeordnet sein. Als Innenseite einer Lage des Endlosbands (und auch des Endlosbands selbst) wird die bei Umlauf innere, den Trommeln zugewandte Seite angesehen. Als Außenseite einer Lage des Endlosbands (und auch des Endlosbands selbst) wird entsprechend die bei Umlauf äußere, den Trommeln abgewandte Seite angesehen. Die Außenseite des Endlosbands ist somit in der Regel die mit einem Produkt in Berührung kommende Seite.

In einer vorteilhaften Ausgestaltung der Vorrichtung sind die Trommeln so gelagert, dass das Endlosband zu einer Seite hin leicht von den Trommeln entnommen werden kann beziehungsweise auf die Trommeln aufgelegt werden kann. Das kann beispielsweise erreicht werden, indem eine jeweilige Lagerachse der Trommeln nur an einer Seite am Gestell gelagert beziehungsweise befestigt ist, oder dass an der betreffenden Seite zwar ebenfalls eine Achsenlagerung vorzusehen ist, die aber unaufwändig vom Gestell demontierbar ist. Eine solche Anlagenkonfiguration wird wegen ihrer Geometrie auch als C-Ausführung bezeichnet und bietet den Vorteil, ein Endlosband auflegen zu können oder von der Anlage abnehmen zu können, ohne die Lagerung der Trommel aufwändig demontieren zu müssen.

Vorteilhaft sind die Riemenscheiben benachbart zu der offenen Seite der C-Geometrie angeordnet. Vorteilhaft wird das Endlosband so auf der Vorrichtung mit C-Geometrie eingesetzt, dass die Kontaktelemente an der offenen Seite des "C" liegen. An dieser Seite sind dann die Riemenscheiben angeordnet und entsprechend sind nur an dieser Seite an dem Riemen die Energieempfänger montiert, die synchron zum Endlosband umlaufen, so dass sie ihre Relativposition zu dem mindestens einen Flächenheizelement beibehalten wird. Als Riemenscheiben können dabei bevorzugt Zahnscheiben eingesetzt werden und als Riemen entsprechend ein Zahnriemen.

In einer weiteren vorteilhaften Ausgestaltung der Vorrichtung umfasst der mindestens eine Energieempfänger mindestens ein Induktionsspule, um Energie induktiv aufzunehmen. Auf diese Weise kann eine berührungslose Energieübertragung zu den Energieempfängern umgesetzt sein, die trotz der Bewegung des Endlosbandes und der Energieempfänger verschleißfrei erfolgt. Der Energietransmitter kann dazu mindestens einen mit einem hochfrequenten Strom beaufschlagbaren Leiter aufweisen, der in Form eines Ovals im Bereich der Riemenscheiben verläuft. Bevorzugt wird der Leiter von dem mindestens einen Energieempfänger umgriffen, um das von ihm erzeugte magnetische Wechselfeld effektiv durch die Induktionsspule führen zu können. Weiter bevorzugt ist die Induktionsspule auf einen Ferritkern gewickelt, um Feldlinien des vom Leiter erzeugten Feldes in dem Bereich der Spule zu konzentrieren.

Als Alternative zur induktiven Energieübertragung kann in einer weiteren vorteilhaften Ausgestaltung der Vorrichtung vorgesehen sein, dass der Energieempfänger mindestens zwei Schleif- oder Rollkontakte als Stromabnehmer aufweist, um Strom einer Kontaktschiene abzunehmen. Ein dafür geeigneter Energietransmitter weist mindestens zwei Stromschienen auf, die von den Schleif- oder Rollkontakten kontaktiert werden.

In einer weiteren vorteilhaften Ausgestaltung der Vorrichtung weist das mindestens eine Flächenheizelement des Endlosbands eine flächige Widerstandsschicht und mindestens zwei in Randbereichen darauf angeordnete streifenförmige Elektroden auf, wobei die Elektroden quer zu der Umlaufrichtung des Endlosbands verlaufen und wobei jede Elektrode mit mindestens einem der seitlich am Endlosband angeordneten Kontaktelement verbunden ist. Durch die quer zu der Umlaufrichtung des Endlosbands verlaufenden Elektroden wird erreicht, dass Strom zum Betreiben des mindestens einen Flächenheizelements über Elektroden in die Widerstandsschicht geführt wird, deren Länge eine Breite des Endlosband nicht übersteigt. Entsprechend sind in den Elektroden auftretende Spannungsabfälle deutlich kleiner als bei Elektroden, die in Längsrichtung, also der Umlaufrichtung des Endlosbands, verlaufen, da in der Regel die Länge eines technisch genutzten Endlosbands seine Breite deutlich übersteigt. Die geringeren Spannungsabfälle in den Elektroden resultieren in einer homogeneren und kontrollierbaren Temperatur bzw. Wärmeabgabe des Flächenheizelements. Das mindestens eine Flächenheizelement weist dabei eine Länge in der Bandlängsrichtung und eine Breite in der Bandquerrichtung auf, wobei vorteilhaft das Verhältnis von Länge und Breite kleiner als 2, bevorzugt kleiner als 1,5 und besonders bevorzugt kleiner oder gleich 1 ist.

Das Endlosband kann dabei in der Umlaufrichtung mindestens zwei, bevorzugt mehrere Flächenheizelemente hintereinander liegend angeordnet aufweisen. Dabei kann entweder nur ein Teil des Umfangs des Endlosbands oder auch der gesamte Umfang des Endlosbands mit Flächenheizelementen belegt sein. Vorteilhaft weisen alle Kontaktelemente des Endlosbands zur selben Seite des Endlosbands, so dass nur ein Riemen mit mitbewegten Energieempfängern an nur einer Seite der Vorrichtung benötigt wird.

Im Hinblick auf die Breite des Endlosbandes erstreckt sich das Flächenheizelement bevorzugt über die gesamte Breite des Endlosbands, sodass sich über die Breite des Endlosbands eine homogene Temperaturverteilung ergibt bzw. eine gleichmäßige Wärmeabgabe erzielt wird. Die bevorzugt mehreren hintereinander angeordneten Flächenheizelemente in der Bandlängsrichtung erlauben eine Einstellung von Temperaturen bzw. abgegebenen Wärmemengen, die entlang der Bandlänge flexibel von Flächenheizelement zu Flächenheizelement variieren können. Es können so räumliche und/oder zeitliche Temperaturprofile umgesetzt werden, die optimal an Herstellungs- oder Bearbeitungsschritte angepasst sind, bei denen das Endlosband als Trägermedium und/oder Transportmedium und/oder Heizmedium dient.

Bei einer weiteren vorteilhaften Ausgestaltung der Vorrichtung des Endlosbands führen Anschlusskabel von dem mindestens einen Flächenheizelement zu dem mindestens einen mitgeführten Energieempfänger. Die Anschlusskabel sind dabei mit den Kontaktelementen verbunden. Diese wiederum können bevorzugt als Krampen ausgebildet sein, die in die Elektroden gecrimpt sind. Weiter können die Kontaktelemente, insbesondere in einem Abschnitt, der neben der Trägerlage des Endlosbandes liegt, Crimpkontakte zur Verbindung mit den Anschlusskabeln aufweisen.

Bei einer weiteren vorteilhaften Ausgestaltung der Vorrichtung ist vorgesehen, dass der mindestens eine Energieempfänger eine Steuerung umfasst, um eine an dem mindestens einen Flächenheizelement anliegende Spannung, einen durch das Flächenheizelement fließenden Strom und/oder eine an das Flächenheizelement abgegebene Leistung zu steuern oder zu regeln. Die Steuerung kann zudem einen bevorzugt drahtlos arbeitenden Datenempfänger umfassen, um Vorgaben für einzustellende bzw. einzuregelnde Betriebsparameter zu empfangen.

Ein derartiger, eine Steuerung aufweisender Energieempfänger kann sowohl bei induktiver Energieübertragung, als auch bei Energieübertragung über Schleif- bzw. Rollkontakte genutzt werden. Bei der Energieübertragung über Schleif- bzw. Rollkontakte kann die Steuerung bzw. Regelung der genannten Betriebsparameter extern von den Energieempfängern umgesetzt sein, z.B. durch den Einsatz eines steuerbaren/regelbaren Netzteils, das die Betriebsenergie für das mindestens eine Flächenheizelement liefert. Es können auch mehrere Stromkreise vorhanden sein, denen jeweils separate Stromschienen und Schleif- bzw. Rollkontakten zugeordnet sind. In dem Fall kann eine individuelle Steuerung einzelner Flächenheizelement oder von Gruppen von Flächenheizelementen durch den Einsatz verschiedener, individuell steuerbarer bzw. regelbarer Netzteile erfolgen.

Weiter können zusätzliche Funktionslagen in das Endlosband eingearbeitet sein, beispielsweise eine elektronische Funktionslage, bei der mindestens eine elektronische Schaltung in Dünnschichttechnologie auf eine Kunststofffolie aufgebracht ist. So kann z.B. die zuvor erwähnte Steuerung der Betriebsparameter für das Flächenheizelement alternativ auch im Endlosband selbst umgesetzt werden. Weiter können Sensoren, insbesondere Temperatur- oder Drucksensoren oder auch Sensorschaltungen mit solchen Sensoren integriert werden. Ebenso können Kommunikationsschaltungen einschließlich der dafür benötigten Antennen eingebettet werden, beispielsweise zur WLAN- (Wireless Local Area Network), Bluetooth-, RFID- (Radio Frequency IDentification) oder GPRS- (General Packet Radio Service) Kommunikation.

In einer weiteren vorteilhaften Ausgestaltung der Vorrichtung umfasst das Endlosband eine flächige Widerstandsschicht, die z.B. Kohlefasern aufweist. Insbesondere kann die flächige Widerstandsschicht ein Gewirk aus Kohlefasern sein, das sich durch einen homogenen Flächenwiderstand und daher mit einer homogene Wärmeabgabe bei Stromdurchfluss auszeichnet. Bevorzugt ist eine derart hergestellte Widerstandsschicht so flexibel, dass eine dauerhafte Umlaufbewegung des Endlosbandes nicht zu einer der Degenerierung der Widerstandsschicht führt. Die flächige Widerstandsschicht ist bevorzugt zwischen isolierenden Folien eingebettet. Zudem weist weiter bevorzugt das Endlosband eine umlaufend ausgebildete äußere Decklage auf. Die isolierenden Folien ebenso wie die Decklage können bevorzugt aus PEEK oder Kapton gefertigt sein, das mechanisch belastbar ist, chemisch weitestgehend inert ist, an dem Produkte wenig haften und das Temperaturen des Endlosbandes bis in einen Bereich von etwa 300 bis 400° C zulässt. Alternativ zur Verwendung einer PEEK-Folie kann auch im Herstellungsprozess auch PEEK-Pulver aufgebracht werden, das dann zu der Decklage verschmolzen wird.

In einer weiteren vorteilhaften Ausgestaltung der Vorrichtung weist das Endlosband eine Lage mit einem flexiblem Schlauch und/oder mit einem flexiblen und mit einem flüssigen oder gasförmigen Medium befüllbaren Kissen auf, wobei Anschlüsse zum Zuführen von Medien ebenfalls seitlich am Endlosband angeordnet sind. Das zugeführte flüssige oder gasförmige Medium kann zusätzlich zu Heizzwecken oder auch zur Kühlung reingesetzt werden. Zudem kann die zusätzliche Lage einer Druckvergleichmäßigung dienen, wodurch eine isobare Prozessführung ermöglicht wird.

Weiter kann das Endlosband eine Mehrzahl von über die Oberfläche verteilten Durchlässen aufweisen. Die Durchlässe können vorteilhaft verwendet werden, um ein Werkstück mit Vakuum und/oder Druckluft oder anderen Gase durch das Endlosband zu beaufschlagen.

Die Erfindung wird nachfolgend anhand von Ausführungsbeispielen mithilfe von Figuren näher erläutert. Die Figuren zeigen:
- Fig.1: eine schematische Schnittdarstellung eines Endlosbands in einem Ausführungsbeispiel;
- Fig. 2: eine schematische Draufsicht auf einen Abschnitt eines Endlosbands;
- Fig. 3: ein vergrößerter Ausschnitt aus Figur 2, wobei das Endlosband längs geschnitten dargestellt ist;
- Fig. 4a-c: verschiedene räumliche Darstellung einer Vorrichtung mit einem Endlosband; und
- Fig. 5a-c: verschiedene räumliche Darstellung einer weiteren Vorrichtung mit einem Endlosband.

In allen Figuren kennzeichnen gleiche Bezugszeichen gleiche oder gleichwirkende Elemente. Aus Gründen der Übersichtlichkeit ist nicht in jeder Figur jedes Element mit einem Bezugszeichen versehen. Relative Begriffe wie "links", "rechts", "oben", "unten" sind auf die Darstellung in der jeweiligen Figur bezogen.

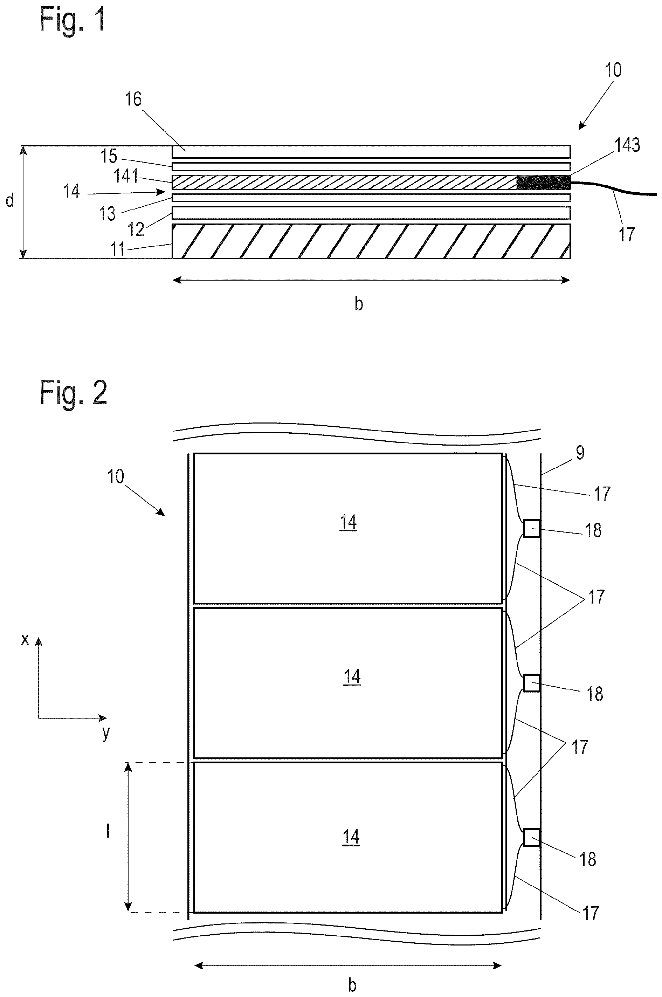

In den Figuren 1-3 ist zunächst ein Endlosband 10, das in einer erfindungsgemäßen Vorrichtung eingesetzt werden kann, in verschiedenen Darstellungen gezeigt.

Figur 1 gibt das Endlosband 10 in einem schematischen Querschnitt wieder, um seinen Aufbau mit verschiedenen, übereinander liegenden Lagen zu erläutern. Um die Lagen besser darstellen zu können, ist die Darstellung in Figur 1 nicht maßstabsgetreu, insbesondere ist eine Dicke d des Endlosbands 10 gegenüber seiner Breite b deutlich überhöht dargestellt. Zudem ist der Übersichtlichkeit halber zwischen den verschiedenen Lagen jeweils eine Lücke dargestellt, um die Lagen besser voneinander trennen zu können.

Das Endlosband 10 weist eine in der Figur 1 unten dargestellte Trägerlage 11 auf, deren Material anwendungsabhängig gewählt ist und beispielsweise Stahl, Kunststoff oder Gummi als Vollmaterial sein kann. Weiter kann die Trägerlage 11 durch einen Faserverbund gebildet sein, aufweisend Fasern aus Metall, Glas, Kohlenstoff, Kunststoff und/oder Naturtextilien.

Die Trägerlage 11 stellt bereits ein ringförmiges, in sich geschlossenes Endlosband dar, wobei der Ring nahtlos ausgebildet sein kann oder mithilfe einer Naht geschlossen sein kann. Die mechanischen Eigenschaften des Endlosbands 10 werden im Wesentlichen durch die mechanischen Eigenschaften der Trägerlage 11 definiert. Vorteilhaft kann jedes kommerziell erhältliche Endlosband als Trägerlage 11 für das erfindungsgemäße Endlosband 10 dienen.

Das in Figur 1 gezeigte Endlosband 10 kann beispielsweise eine Breite b von 60 Zentimetern (cm) aufweisen. Es kann eine Dicke d im Bereich von Millimetern (mm) haben, die im Wesentlichen durch die Dicke der Trägerlage 11 bestimmt wird.

Die Trägerlage 11, also das gegebenenfalls kommerziell erhältliche Trägerband, ist mit mindestens einem Flächenheizelement 14 versehen, um eine integrierte Heizmöglichkeit zu schaffen. Bei dem hier dargestellten Endlosband 10 ist das mindestens eine Flächenheizelement 14 an der Außenseite der Trägerlage 11 angeordnet, also an der Seite, die bei einem Umlauf des Endlosbands 10 über Trommeln diesen abgewandt ist. In weiteren Ausgestaltungen kann das mindestens eine Flächenheizelement 14 auch alternativ oder zusätzlich an der Innenseite der Trägerlage 11 angeordnet sein, also an der Seite, die bei einem Umlauf des Endlosbands 10 den Trommeln zugewandt ist.

Das Flächenheizelement 14 umfasst eine Widerstandsschicht 141, beispielsweise eine Kohlenstofflage, die als Laminatverbund zwischen einer oder mehrere elektrisch isolierenden Folien 13 auf einer und einer oder mehreren weitere isolierenden Folien 15 auf der anderen Seite angeordnet ist. Das Flächenheizelement 14 kann beispielsweise eine Heizfolie der Firma Frenzelit Werke GmbH umfassen, die unter dem Markennamen "HicoTEC-TP" erhältlich ist. Die Widerstandsschicht 141 weist zusammengefügte, leitfähige Fasern, beispielsweise Kohlenstofffasern auf, wobei ein gewünschter spezifischer Flächenwiderstand und/oder eine gewünschte maximale Heizleistung pro Fläche im Herstellungsprozess definiert eingestellt werden kann. Die isolierenden Folien 13, 15 können beispielsweise aus PEEK gefertigt sein.

Das Flächenheizelement 14, ggf. mit den isolierenden Folien 13, 15, ist mittels einer Kleberschicht 12 auf die Trägerlage 11 aufgebracht. Der Kleber kann beispielsweise auf Silikonbasis oder auf der Basis von Polyurethan (PUR) hergestellt sein. Es ist auch denkbar, die Kleberschicht 12 durch aufgeschmolzenes PEEK-Pulver zu realisieren.

Die Dicke der Kleberschicht 12 und ihre Elastizität ist so gewählt, dass beim Umlaufen des Endlosbandes 10 auftretende Scherbewegungen, insbesondere im Bereich von Trommeln, über die das Endlosband 10 läuft, ausgeglichen werden.

Zur Außenseite des Endlosbands 10 hin, also zu der beim Umlauf den Trommeln abgewandten Seite, ist eine abschließende Decklage 16 aufgebracht, die beispielsweise ebenfalls aus PEEK, Kapton oder anderen geeigneten Materialien bestehen kann. Bevorzugt werden für die Deckschicht 16 solche Materialien verwendet, auf denen Produkte im Prozess, für den das Endlosband 10 eingesetzt wird, nicht oder möglichst wenig haften. Die Decklage 16 kann in Form einer Folie aufgebracht werden. Alternativ zur Verwendung einer Folie kann auch im Herstellungsprozess auch PEEK-Pulver aufgebracht werden, das dann zu der Decklage 16 verschmolzen wird.

Neben der hier explizit dargestellten Kleberschicht 12 zwischen der Trägerlage 11 und dem Flächenheizelement 14 bzw. der weiteren isolierenden Folie 15 kann vorgesehen sein, dass auch andere benachbarte Lagen durch ein Kleber oder ein Bindemittel miteinander verbunden sind. Dazu kann beispielsweise ein Harz oder eine 2-Komponenten Harz/Binder-Kombination eingesetzt werden, beispielsweise auf Basis eines Epoxids, Polyesters, Vinylethers oder auch auf Basis von PUR. Das Bindemittel kann vor dem Aushärten (zäh-) flüssig oder auch pulverförmig sein. Ein Aushärten des Bindemittels kann durch Temperatureinwirkung oder auch durch Applizieren von Druck unterstützt bzw. beschleunigt werden.

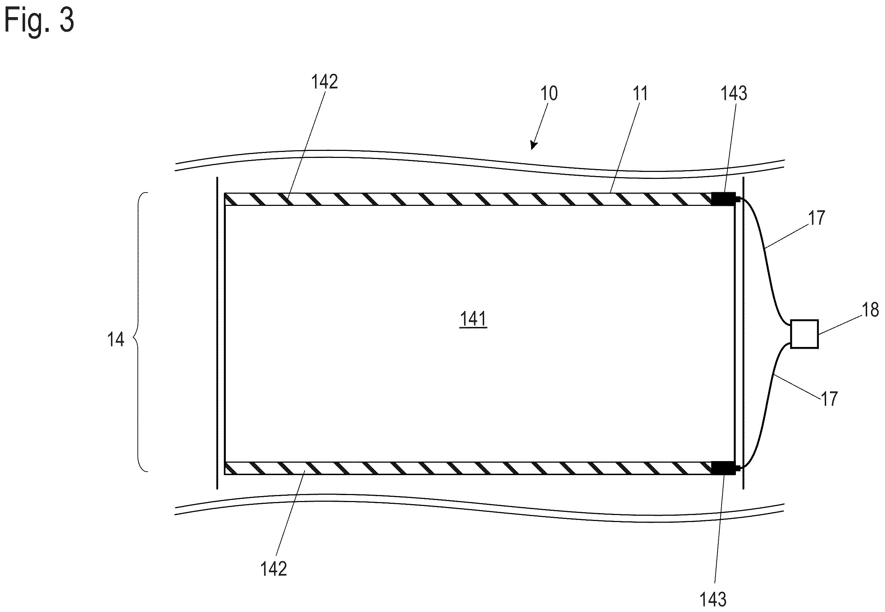

An einer Seite des Endlosbands 10 ist in der Figur 1 ein Kontaktelement 143 zur Kontaktierung des Flächenheizelements 14 erkennbar, das den Anschluss eines Verbindungskabels 17 ermöglicht. Das Verbindungskabel 17 dient der Zufuhr von Strom zum Betreiben des Flächenheizelements 14. Dieses wird im Zusammenhang mit den Figuren 2 und 3 nachfolgend näher erläutert.

Figur 2 zeigt eine Draufsicht auf einen Abschnitt des Endlosbandes 10. Die Längsrichtung des Bandes ist in der Figur 2 auch als x-Richtung bezeichnet und die Bandquerrichtung als y-Richtung. Die Längsrichtung x ist auch die Umlaufrichtung des Bands.

Die Figur 2 zeigt, dass sich in der Bandlängsrichtung x separate Flächenheizelemente 14 aneinanderreihen. Die Flächenheizelemente 14 können gleiche oder unterschiedliche Abmessungen und/oder gleiche oder unterschiedliche elektrische Eigenschaften aufweisen. In der Bandlängsrichtung x kann zwischen benachbarten Flächenheizelementen 14 ein Abstand von einigen Millimetern vorgesehen sein, wobei der Zwischenraum zwischen den Flächenheizelementen 14 mit einem bevorzugt elastischen Füllmaterial, insbesondere einem Kleber, aufgefüllt werden kann. Der Zwischenraum dient zum einen einem Längenausgleich in der Bandlängsrichtung x bei einem Umlauf und bei thermischen Ausdehnungen. Weiter kann der Zwischenraum genutzt werden, um Flächenheizelemente 14 einer vorgegebenen Länge l möglichst gleichmäßig auf einer in ihrer Länge ebenfalls vorgegebenen Trägerlage 11 verteilen zu können.

Die Flächenheizelemente 14 erstrecken sich in Bandquerrichtung y über die im Wesentlichen gesamte Breite b des Endlosbandes 10, weisen in Bandlängsrichtung x die Länge l auf, die nur einen Teil der Gesamtlänge des Endlosbandes 10 beträgt. Dabei kann vorgesehen sein, dass das Endlosband 10 entlang seiner gesamten Länge mit Flächenheizelementen 14 belegt ist, oder dass nur ein Abschnitt oder mehrere getrennte Abschnitte des Endlosbandes 10 Flächenheizelemente 14 aufweist bzw. aufweisen. Bei dem gezeigten Beispiel ist die Länge l jedes Flächenheizelements 14 kleiner als seine Breite.

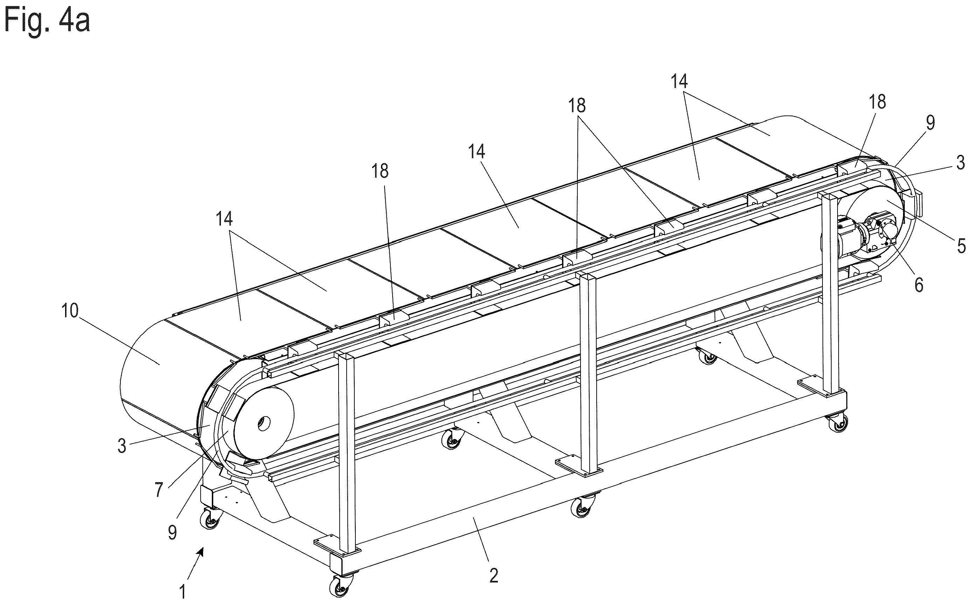

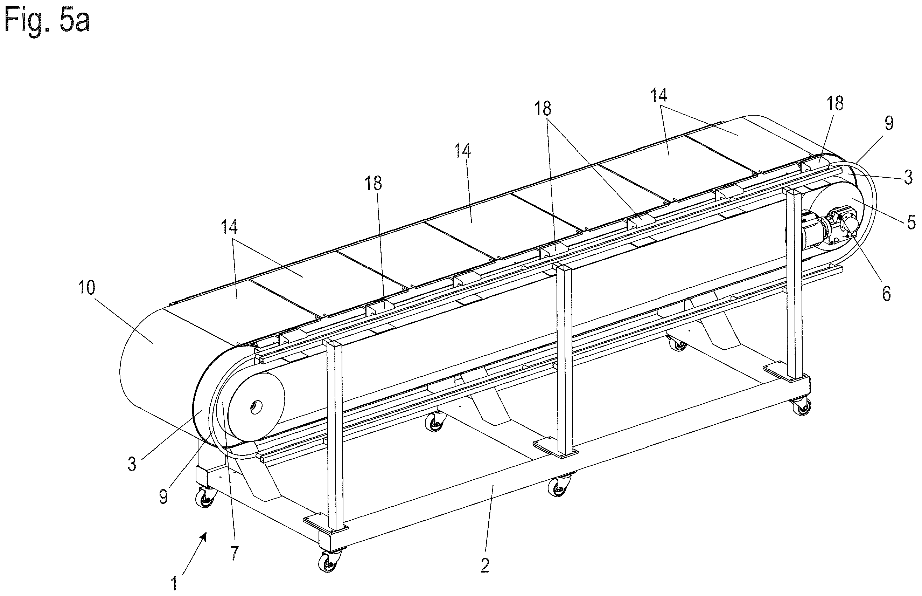

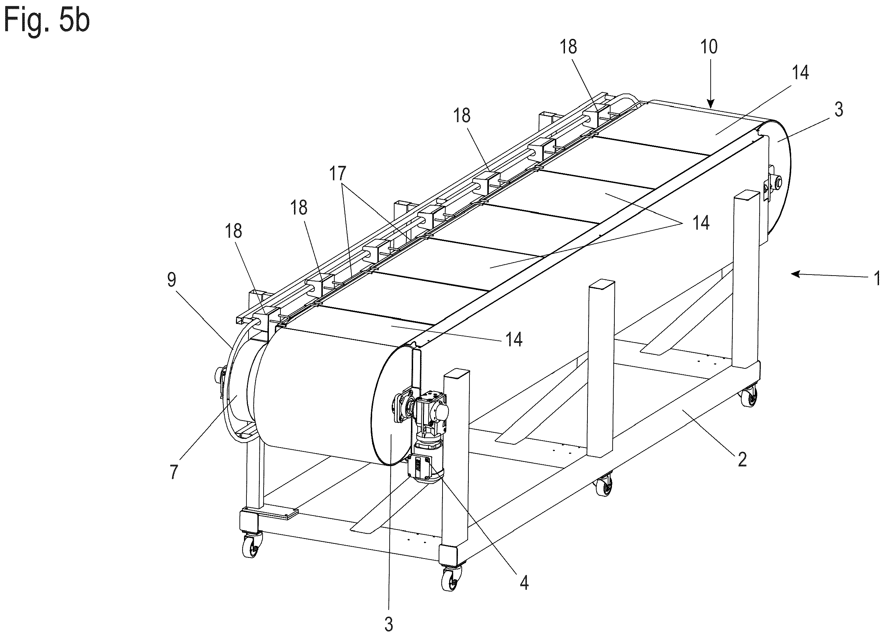

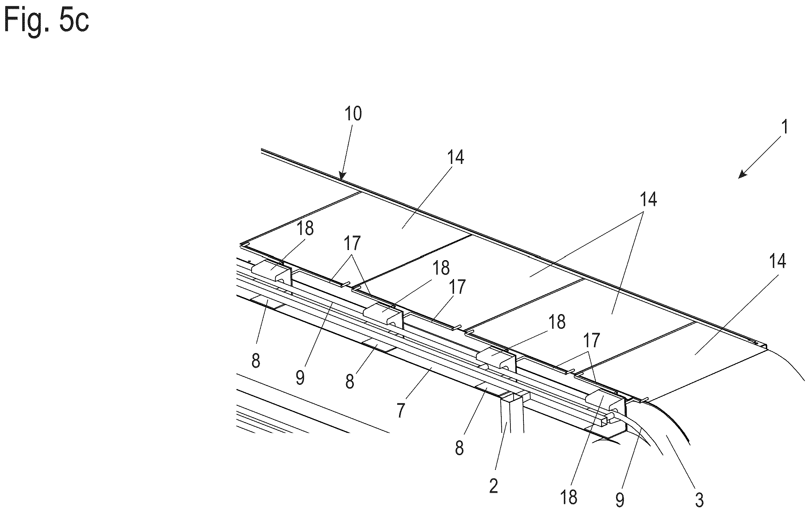

Jedes Flächenheizelement 14 wird separat mit Strom und damit Heizenergie durch zwei Verbindungskabel 17 versorgt. Die Verbindungskabel 17, die in Bandlängsrichtung x gesehen jeweils in einem Endabschnitt der Flächenheizelemente angeordnet sind, führen zu einem Energieempfänger 18, der mit dem Band bewegt wird und von extern mit Energie versorgt wird, die an die Flächenheizelemente 14 weitergeleitet wird. Die Mechanismen zur Übertragung der Energie in den Energieempfänger 18 werden nachfolgend im Zusammenhang mit den Figuren 4a-c und 5a-c noch näher erläutert.

Figur 3 zeigt eines der Flächenheizelemente 14 in einem Längsschnitt, also einem Schnitt in der xy-Ebene des Endlosbandes 10 vergrößert.

Das Flächenheizelement 14 weist die flächige Widerstandsschicht 141 auf, in der ein Stromfluss zur Wärmeabgabe führt. Die in Bandquerrichtung y verlaufenden Randabschnitte des Flächenheizelements 14 sind mit streifenförmigen Elektroden 142 versehen, beispielsweise Kupferfolien oder flächigen Kupfergeweben. An einer Seite, hier beispielsweise der rechten Seite, sind die schon im Zusammenhang mit der Figur 1 erwähnten Kontaktelemente 143 angeordnet, über die jeweils die entsprechende Elektrode 142 mit einem Verbindungskabel 17 verbunden ist. Die Kontaktelemente 143 können beispielsweise in Form von Krampen ausgebildet sein, die in die Elektroden 142 gecrimpt werden. In Richtung des Verbindungskabels 17 können die Krampen zudem Crimp-Anschlüsse aufweisen, um eine gut leitfähige und mechanisch belastbare Kontaktierung zu den Verbindungskabeln 17 zu ermöglichen.

Der Flächenwiderstand der Elektroden 142 ist deutlich geringer als der der Widerstandsschicht 141, so dass ein Spannungsabfall im Wesentlichen innerhalb der Widerstandsschicht 141 erfolgt. Entsprechend ist ein entlang der Elektrode 142 auftretender Spannungsabfall gering, was zu einer homogenen Wärmeabgabe in der gesamten Widerstandsschicht 141 führt. Durch die Anordnung der Elektroden 142 quer im Endlosband 10 braucht über die Elektrode 142 Strom auch nur über den relativ kurzen Weg der Breite des Endlosbands 10 geführt zu werden, was zu insgesamt geringen Verlusten der Elektroden 142 verglichen mit längs im Endlosband angeordneten Elektroden führt. Zudem sind Vorkehrungen zum Zuführen der Energie nur an einer Bandseite des Endlosbands 10 vorzusehen, was den Aufbau einer Anlage, in der das Endlosband 10 verwendet wird, vereinfacht, was anhand der nachfolgend beschriebenen Figuren 4a-c und 5a-c näher erläutert wird.

Das Endlosband 10 kann nachträglich perforiert werden, um auch für Prozesse in den Vakuum und/oder Druckluft oder andere Gase am Werkstück appliziert werden, verwendet werden zu können. Aufgrund des Aufbaus und der Eigenschaften der Flächenheizelemente 14 können auch diese entsprechende Durchlässe (Öffnungen) aufweisen. Bevorzugt sind dabei die Durchlässe von einem Saum umgeben, innerhalb dessen die die Widerstandsschicht 141 umgebenden isolierenden Folien 13, 15 unmittelbar miteinander verbunden sind. Dieser Saumbereich verhindert dann ein Eindringen von Prozessmittel zwischen die isolierenden Folien 13, 15 zum Schutz der Widerstandsschicht 141.

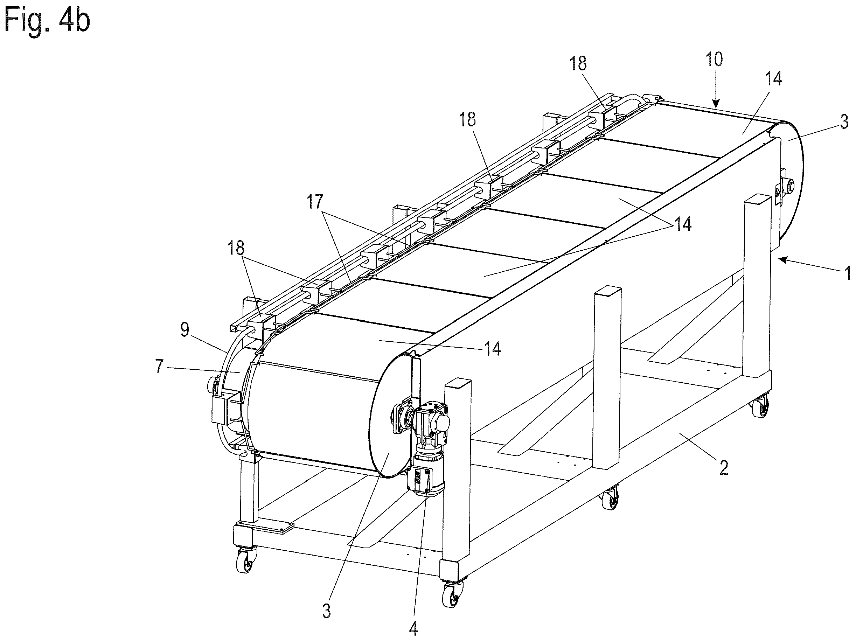

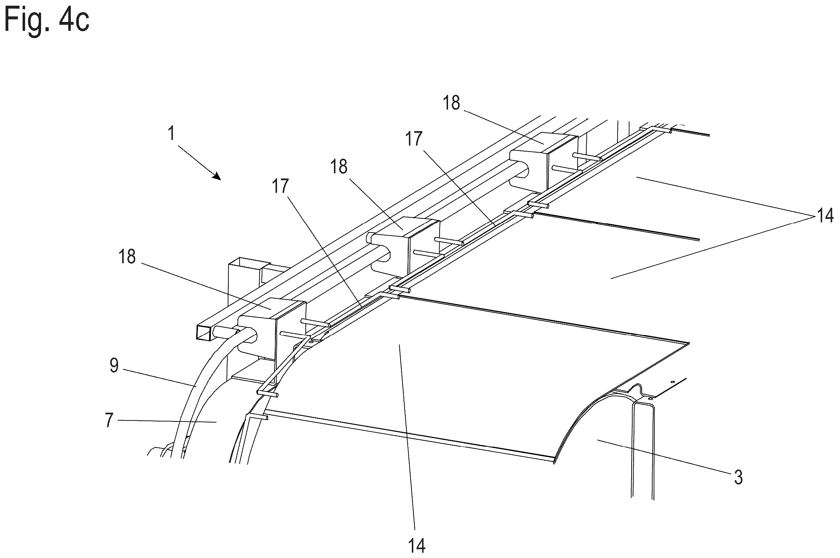

In den Figuren 4a-c ist eine erfindungsgemäße Vorrichtung 1 dargestellt mit einem Endlosband 10, z.B. gemäß den Figuren 1-3. Die Figuren 4a und b zeigen die Vorrichtung 1 in einer räumlichen Gesamtansicht aus verschiedenen Blickrichtungen. Die Figur 4c zeigt einen Ausschnitt der Vorrichtung 1 vergrößert.

Die gezeigte Vorrichtung 1 ist in der Regel Teil einer größeren Anlage, beispielsweise einer Bandpresse oder einer Doppelbandpresse oder einer Produktionsstraße für Produkte, die während ihres Produktionsprozesses transportiert und geheizt werden.

Die Vorrichtung 1 weist ein Gestell 2 auf, an den zwei Trommeln 3 drehbar gelagert sind. Eine der Trommeln ist mit einem Trommelantrieb 4, üblicherweise einem Elektromotor mit nachgelagertem Getriebe, versehen.

Die Drehachsen der Trommeln 3 sind parallel zueinander ausgerichtet und der Abstand der Trommeln 3 ist variierbar, um das aufgelegte Endlosband 10 zu spannen. Beim Betrieb des Trommelantriebs 4 läuft das Endlosband 10 mit bevorzugt einstellbarer/regelbarer Umlaufgeschwindigkeit um die beiden Trommeln 3.

Die Trommeln 3 sind bevorzugt so gelagert, dass das Endlosband 10 zu einer Seite hin leicht von den Trommeln 3 entnommen werden kann beziehungsweise auf die Trommeln 3 aufgelegt werden kann. Das kann beispielsweise erreicht werden, indem eine jeweilige Lagerachse der Trommeln 3 nur an einer Seite am Gestell 2 gelagert beziehungsweise befestigt ist. An der gegenüberliegenden Seite sind die Lagerachsen entweder nicht unterstützt, oder - falls das aufgrund einer hohen Bandspannung nicht oder nur aufwändig umsetzbar ist - stützen sich mit einem Querträger gegeneinander ab, um den Zugkräften der Bandspannung entgegen zu wirken. Auch ist es denkbar, an der betreffenden Seite ebenfalls eine Achsenlagerung vorzusehen, die dann aber, ggf. zusammen mit sonstigen Anbauteilen, unaufwändig vom Gestell 2 demontierbar ist. Eine solche Anlagenkonfiguration wird wegen ihrer Geometrie auch als "C-Ausführung" bezeichnet.

Das Endlosband 10 ist so auf die Trommeln 3 aufgelegt, dass sich die Verbindungskabel 17 der Flächenheizelemente 14 und die damit verbundenen Energieempfänger 18 auf der offenen Seite des "C" befinden, also auf der Seite, an der die Trommeln 3 nicht am Gestell 2 montiert sind.

An dieser Seite sind konzentrisch zu und axial beabstandet von den Trommeln 3 Zahnscheiben 5 angeordnet, von denen eine mittels eines Zahnscheibenantriebs 6 aktiv gedreht werden kann. Auf die Zahnscheiben 5 ist ein Zahnriemen 7 aufgelegt, der analog zum Endlosband 10 als Endlosriemen ausgebildet ist und wie das Endlosband 10 umlaufen kann. Auf dem Zahnriemen 7 sind in regelmäßigen und geeigneten Abständen Tragewinkel 8 angeordnet, an deren freien Ende sich die Energieempfänger 18 befinden.

Bei der Bewegung des Endlosbandes 10 wird der Zahnriemen 7 synchron mitbewegt, so dass die Energieempfänger 18 ihre relative Position zum jeweiligen zugeordneten Flächenheizelement 14 während des Umlaufs beibehalten. Bevorzugt ist dazu eine Regelung der Drehzahl des Zahnscheibenantriebs 6 vorhanden, um den Gleichlauf zu sichern. Die Regelung des Zahnscheibenantriebs 6 kann anhand von Positionssensoren erfolgen, die die Bewegung des Zahnriemens 7 und des Endlosbandes 10 zum Beispiel mithilfe von optischen Markierungen detektieren. Mithilfe der genannten optischen Markierungen ist auch eine Absolutposition des Endlosbandes 10 bei seinem Umlauf bekannt, so dass auch die Position jedes Flächenheizelements 14 zu jedem Zeitpunkt einer Steuerung der Vorrichtung 1 bekannt ist.

Aus Sicherheitsgründen kann vorgesehen sein, dass die Verbindungskabel 17 den jeweiligen Energieempfänger 18 in lösbaren Steckverbindern kontaktieren. Falls Störungen im Gleichlauf zwischen dem Endlosband 10 und dem Zahnriemen 7 auftreten, kann so die Verbindung zwischen dem Verbindungskabel 17 und dem Energieempfänger 18 getrennt werden, ohne dass es zu Materialzerstörungen kommt. Weiter kann vorgesehen sein, dass der Energietransmitter 9 stromlos geschaltet wird, wenn Störungen im Gleichlauf zwischen dem Endlosband 10 und dem Zahnriemen 7 erkannt werden. Solche Störungen im Gleichlauf liegen z.B. vor, wenn ein Geschwindigkeitsunterschied zwischen dem Endlosband 10 und dem Zahnriemen 7 außerhalb eines Toleranzbereichs liegt.

Bei dem in den Figuren 4a bis 4c dargestelltem Ausführungsbeispiel ist eine induktive Energieübertragung zu den Energieempfängern 18 vorgesehen. Zu diesem Zweck ist ein Energietransmitter 9 in Form eines Ovals radial außerhalb des Zahnriemens 7 angeordnet, an dem die Energieempfänger 18 berührungsfrei entlangfahren. Der Energietransmitter 9 verläuft zwischen den Trommeln 3 jeweils gerade und im Bereich der Trommeln 3 halbkreisförmig und nimmt somit die Form des Ovals an, das dem Umlauf des Endlosbands 10 entspricht.

Der Energietransmitter 9 weist ein oder mehrere Kabel auf, die mit einem hochfrequenten Stromsignal beaufschlagt werden. Die dabei genutzte Frequenz kann im Bereich von einigen 10 bis einigen 100 Kilohertz (kHz) liegen. Die Energieempfänger 18 umfassen Spulen, in denen der durch den Energietransmitter 9 fließende hochfrequente Wechselstrom eine Spannung induziert, die nach Gleichrichtung und Wandlung in einen geeigneten Spannungsbereich das jeweilige Flächenheizelement 14 versorgt.

In jedem Energieempfänger 18 kann dazu eine Steuerschaltung angeordnet sein, die zur Versorgung des Flächenheizelements 14 eine einstellbare Spannung oder einen einstellbaren Strom oder eine einstellbare Leistung bereitstellt. Weiter kann vorgesehen sein, dass im Bereich des Flächenheizelements 14 ein Temperaturfühler mit in das Endlosband 10 eingebettet ist, der über entsprechende Sensorkabel ebenfalls mit dem Energieempfänger 18 verbunden ist. Der Energieempfänger 18 kann in dem Fall dazu eingerichtet sein, die Energieabgabe an das Flächenheizelement 14 temperaturabhängig so zu steuern, dass eine bestimmte vorgegebene Temperatur am Flächenheizelement 14 erreicht wird.

Zur Vorgabe von einzustellenden Parametern (also z.B. Spannung, Strom, Leistung und/oder Temperatur) kann eine Datenkommunikation von einer übergeordneten Steuerung der Vorrichtung 1 zu jedem Energieempfänger 18 etabliert sein, beispielsweise über ein Funkprotokoll wie Bluetooth oder WLAN oder auch über eine kontaktlose Datenübermittlung, bei der Daten auf das energieübertragende Hochfrequenzsignal des Energietransmitters 9 aufmoduliert sind.

Die Einstellung der Parameter kann dabei konstant für den gesamten Bandumlauf eingestellt sein, wobei eine individuelle Einstellung verschiedener der Flächenheizelemente 14 vorgesehen sein kann. Es ist allerdings auch denkbar, dass positionsabhängig die Parameter einzelner oder aller Flächenheizelemente 14 während des Bandumlaufs variiert werden. Damit lässt sich ein Betriebszustand erreichen, in dem das Endlosband 10 bestimmte Temperaturen bzw. Wärmemengen an bestimmten Positionen der Vorrichtung 1 einnimmt bzw. abgibt. Beispielsweise kann vorgesehen sein, dass das Abschnitte des Endlosbands 10 eine bestimmte Temperatur annehmen, während sie sich entlang der Oberseite des Gestells 2 bewegen, wohingegen sie eine andere Temperatur während des Rücklaufs an der Unterseite annehmen. Auf diese Weise kann Energie gespart werden, die ansonsten in Form von Strahlungsenergie ungenutzt während des Bandrücklaufs abgegeben werden würde. Auch kann vorgesehen sein, dass die Temperatur einen für den Herstellungsprozess gewünschten oder geeigneten räumlichen (abhängig von der aktuellen Position eines Bandabschnitts) oder zeitlichen Temperaturverlauf, auch Temperaturprofil genannt, folgt.

In alternativen Ausgestaltungen kann als Energietransmitter 9 eine Stromschiene mit Schleifkontaktbahnen eingesetzt werden und als Energieempfänger 18 eine Anordnung von Schleif- oder Rollkontakten. Insbesondere bei Trommeln 3 mit kleineren Radien kann eine Energieübertragung per Schleifkontakt im Bereich des Radius der Trommel 3 problematisch sein. In dem Fall kann vorgesehen sein, den Energietransmitter im Bereich der Trommeln zu unterbrechen und Schleifkontaktbahnen nur in geraden Bereich des Bandes auszubilden.

Es kann ein Stromkreis für alle Flächenheizelemente 14 vorhanden sein, wobei eine individuelle Ansteuerung der Flächenheizelemente 14 wie zuvor für die induktive Energieübertragung durch die Energieempfänger 18 erfolgt. Alternativ können mehrere Schleifkontaktbahnen übereinander oder nebeneinander angeordnet werden, so dass unterschiedliche Stromkreise für verschiedene der Flächenheizelemente 14 etabliert werden können. Die unterschiedlichen Stromkreise können ähnlich wie zuvor im Zusammenhang mit der induktiven Energieübertragung beschrieben, die Flächenheizelemente 14 mit vorgegebener Spannung, vorgegebenem Strom oder vorgegebener Leistung betreiben oder auch auf eine gemessene Temperatur regeln.

Zur Versorgung der Stromkreise können Netzteile, bevorzugt Schaltnetzteile eingesetzt werden, die an ihrem Ausgang einen steuerbaren Hoch- und/oder Tiefsetzsteller aufweisen, so dass gewünschte Versorgungsparameter (Spannung, Strom, Leistung) eingestellt bzw. eingeregelt werden können. Alternativ ist eine Ansteuerung in einem pulsweiten Modulationsverfahren möglich. Unterschiedliche Leistungen können über eine Variation des Tastverhältnisses bei der pulsweiten Modulation eingestellt werden. Der Bereich der Spannung zur Versorgung der Flächenheizelemente 14 kann im Bereich von etwa 20-400 Volt liegen, mit übertragenen Leistungen bis in den Bereich von mehreren Kilowatt pro Flächenheizelement 14.

Alternativ oder zusätzlich zu der oder den Flächenheizlagen 15 können weitere Funktionslagen in das Endlosband eingearbeitet sein. Beispielsweise kann eine elektronische Funktionslage vorgesehen sein, bei der mindestens eine elektronische Schaltung in Dünnschichttechnologie auf eine Kunststofffolie aufgebracht ist. So können beispielsweise Steuerungsschaltungen oder Sensorschaltungen, insbesondere aufweisend Temperatur- oder Drucksensoren, integriert werden. Ebenso können Kommunikationsschaltungen einschließlich der dafür benötigten Antennen eingebettet werden, beispielsweise zur WLAN-, Bluetooth-, RFID- oder GPRS-Kommunikation.

Auch ist es möglich, eine Lage mit einem spiralförmig verlaufenden flexiblen Schlauch vorzusehen. Durch den Schlauch kann ein flüssiges oder gasförmiges Medium zu Kühl- oder Heizzwecken geführt werden.

In dem Ausführungsbeispiel der Figuren 4a-c ist das Endlosband 10 an seiner gesamten äußeren Oberfläche mit Flächenheizelementen 14 versehen. In den Figuren 5a-c wird ein weiteres Ausführungsbeispiel einer Vorrichtung 1 mit Endlosband 10 in gleicher Weise wie in den Figuren 4a-c gezeigt, wobei das Endlosband 10 hier nur in einem Abschnitt mit Flächenheizelementen 14 versehen ist. Von diesem Unterschied abgesehen sind die Vorrichtung 1 und der Aufbau des Endlosbandes 10 vergleichbar. Es wird auf die Beschreibung zu den Figuren 4 a-c verwiesen.

Das Endlosband 10 weist in dem Ausführungsbeispiel der Figuren 5a-c zudem Flächenheizelemente 14 unterschiedlicher Länge (in Bandlängsrichtung x) auf. Das Ausführungsbeispiel zeigt, dass das erfindungsgemäße Endlosband 10 im Hinblick auf seine Ausstattung mit Flächenheizelementen 14 variabel und an die Erfordernisse des Prozesses, für den das Endlosband 10 eingesetzt wird, konfektionieren werden kann.

### Bezugszeichenliste

- 1: Vorrichtung
- 2: Gestell
- 3: Trommel
- 4: Trommelantrieb
- 5: Zahnscheibe
- 6: Zahnscheibenantrieb
- 7: Zahnriemen
- 8: Tragewinkel
- 9: Energietransmitter

- 10: Endlosband
- 11: Trägerlage
- 12: Kleberschicht
- 13: Zwischenfolie

- 14: Flächenheizelement
- 141: Widerstandsschicht
- 142: Elektrode
- 143: Kontaktelement

- 15: weitere Zwischenfolie
- 16: Decklage
- 17: Verbindungskabel
- 18: Energieempfänger

- x: Bandlängsrichtung (Umlaufrichtung)
- y: Bandquerrichtung

- b: Bandbreite
- d: Banddicke
- l: Länge (eines Flächenheizelements)

## Patentansprüche

1. Vorrichtung (1) mit mindestens zwei voneinander beabstandeten Trommeln (3), über die ein Endlosband (10) mit mindestens einem Flächenheizelement (14) umlaufend geführt ist, wobei dem Endlosband (10) in zumindest einem Abschnitt seiner umlaufenden Bewegung Betriebsenergie für das Flächenheizelement (14) zuführbar ist, **dadurch gekennzeichnet, dass**
- das Endlosband (10) an einer Seite mindestens zwei Kontaktelemente (143) zum Zuführen von Betriebsstrom für das mindestens eine Flächenheizelement (14) aufweist, und
- seitlich neben jeder der Trommeln (3) jeweils eine drehbare Riemenscheibe angeordnet ist; wobei
- über die Riemenscheiben ein Riemen geführt ist, an dem mindestens ein Energieempfänger (18) angeordnet ist, der Energie von einem Energietransmitter (9) empfängt; und wobei
- der Energieempfänger (18) zum Übertragen der empfangenen Energie an das mindestens eine Flächenheizelement (14) mit den mindestens zwei Kontaktelementen (143) verbunden ist.

2. Vorrichtung (1) nach Anspruch 1, bei der die Trommeln (3) so an einem Gestell (2) gelagert sind, dass das Endlosband (10) zu einer Seite hin leicht von den Trommeln (3) entnommen werden kann, wobei die Riemenscheiben an dieser Seite der Trommeln (3) angeordnet sind.

3. Vorrichtung (1) nach Anspruch 1 oder 2, bei der die Riemenscheiben Zahnscheiben (5) sind und der Riemen ein Zahnriemen (7) ist.

4. Vorrichtung (1) nach einem der Ansprüche 1 bis 3, bei der der mindestens eine Energieempfänger (18) mindestens eine Induktionsspule aufweist.

5. Vorrichtung (1) nach Anspruch 4, bei der Energietransmitter (9) mindestens einen mit einem hochfrequenten Strom beaufschlagbarer Leiter aufweist, der in Form eines Ovals im Bereich der Riemenscheiben verläuft.

6. Vorrichtung (1) nach Anspruch 5, bei der dar Leiter von dem mindestens einen Energieempfänger (18) umgriffen wird.

7. Vorrichtung (1) nach einem der Ansprüche 1 bis 3, bei der der mindestens eine Energieempfänger (18) mindestens zwei Schleif- oder Rollkontakte aufweist.

8. Vorrichtung (1) nach Anspruch 7, bei der Energietransmitter (9) mindestens zwei Stromschienen aufweist, die von den Schleif- oder Rollkontakten kontaktiert werden.

9. Vorrichtung (1) nach einem der Ansprüche 1 bis 8, bei der das mindestens eine Flächenheizelement (14) des Endlosbands (10) eine flächige Widerstandsschicht (141) und mindestens zwei in Randbereichen darauf angeordnete streifenförmige Elektroden (142) aufweist, wobei die Elektroden (142) quer zu einer Umlaufrichtung (x) des Endlosbands (10) verlaufen, und wobei jede Elektrode (142) mit mindestens einem der seitlich am Endlosband (10) angeordneten Kontaktelement (143) verbunden ist.

10. Vorrichtung (1) nach einem der Ansprüche 1 bis 9, bei der alle Kontaktelemente (143) des Endlosbands (10) zur selben Seite weisen.

11. Vorrichtung (1) nach einem der Ansprüche 1 bis 10, bei der das Endlosband (10) in der Umlaufrichtung (x) mindestens zwei, bevorzugt mehrere Flächenheizelemente (14) hintereinander liegend angeordnet sind.

12. Vorrichtung (1) nach Anspruch 11, bei der sich die mindestens zwei und bevorzugt mehreren Flächenheizelementen (14) des Endlosbands (10) in der Umlaufrichtung (x) entlang des gesamten Umfangs erstrecken.

13. Vorrichtung (1) nach einem der Ansprüche 9 bis 12, bei der sich die streifenförmige Elektroden (142) des Endlosbands (10) entlang der gesamten Breite der flächige Widerstandsschicht (141) erstrecken.

14. Vorrichtung (1) nach einem der Ansprüche 1 bis 13, bei der die mindestens zwei Kontaktelemente (143) über jeweils ein Anschlusskabel (17) mit dem Energieempfänger (18) verbunden sind.

15. Vorrichtung (1) nach einem der Ansprüche 1 bis 14, bei der der mindestens ein Energieempfänger (18) eine Steuerung umfasst, um eine an dem mindestens einen Flächenheizelement (14) anliegende Spannung, einen durch das mindestens eine Flächenheizelement (14) fließenden Strom und/oder eine an das mindestens eine Flächenheizelement (14) abgegebene Leistung zu steuern oder zu regeln.
